# EUROPEAN PATENT APPLICATION

(11) **EP 2 320 475 A2**
(43) Date of publication of application: **11.05.2011**
(21) Application number: 10189173.7
(22) Date of filing: 28.10.2010
(51) Int. Cl.: H01L 31/042, H01L 31/02

(54) **System and method for grounding photovoltaic modules**

(30) Priority: 04.11.2009 US 612170
(71) Applicant: General Electric Company, Schenectady, NY 12345 (US)
(72) Inventor: Jonczyk, Ralf, Newark, DE 19702 (US)
(74) Representative: Bedford, Grant Richard

(57) **Abstract**

A system (100) for grounding photovoltaic (PV) modules (102), comprising a frame (104) for supporting PV modules (102), a support structure (106), and a grounding material (112) disposed between the frame (104) and support structure (106), wherein the grounding material (112) comprises a plurality of metal particles (130) and a vehicle (132) for delivering the plurality of metal particles (130).

## Description

The present disclosure is directed generally to a system for grounding photovoltaic (PV) modules, methods of grounding PV modules, and a composition for grounding PV modules.

Large photovoltaic arrays are now being installed in the United States and have been installed in the European Union for some time. Photovoltaic (PV) modules or arrays produce electricity from solar energy. Electrical power produced by PV modules reduces reliance on electricity generated using non-renewable resources (e.g., fossil fuels), resulting in significant environmental benefits. For the purpose of reducing or eliminating shock and fire hazards, the National Electric Code (NEC) and UL Standard 1703 require the electrical grounding of PV modules. An effective connection to ground reduces the susceptibility of a PV module to damage by lightning, reduces electrostatic buildup (which can damage a PV module), and reduces the risk of harm to personnel who service and repair PV modules. In effect, a connection to an electrical ground drains away any excess buildup of electrical charge.

PV systems need to be grounded just like other electrical systems. PV arrays are usually mounted away from tall objects that could shade the array. In these exposed locations, PV arrays with metal module frames, metal mounting racks, and conductors connected to grounded electrical systems (for utility-interactive systems), are subject not only to induced electrical surges, but to possible direct lightning strikes. With the increasing numbers of utility-interactive PV installations in urban environments, PV systems are being located in close proximity to high voltage transmission lines. In the event of high winds, earthquakes, or accidents, there is a remote possibility that high voltage lines may come into contact with PV arrays. In dry climates, high winds can build up high static electric voltages on large PV arrays. Utility-interactive PV systems are subject to the same line surges that affect other line-connected devices. The NEC requires that any exposed metal surface be grounded if it could be energized. Reliable ground connections are difficult to achieve in systems exposed to outdoor conditions for up to 40 years. Aluminum PV module frames are anodized to prevent corrosion of the aluminum module frame when exposed to the elements for twenty years or longer. To be able to ground the anodized aluminum PV frames, a device or method is needed to break the anodized layer. Conventional grounding devices contain ground lugs screwed into the metal parts of the PV system and electrical wire attached to the ground-lug to provide the required grounding. Conventional grounding devices require a plurality of grounding screws and associated pieces to effectively make the ground to meet the NEC requirements.

What is needed is a PV grounding system that is easy to install and reduces the amount of time needed in the field to install the grounding system. What is also needed is a PV grounding system that can be used with current existing PV arrays and modules to provide a reliable and weather resistant ground connection for metallic parts of the PV system. An additional need includes a PV grounding system that reduces the cost of installation and reduces the number of parts to effect grounding of the PV module.

One aspect of the present disclosure includes a system for grounding photovoltaic (PV) modules, comprising a frame for supporting PV modules, a support structure, and a viscous grounding material disposed between the frame and the support structure.

Another aspect of the present disclosure includes a method of assembling a photovoltaic array, including providing a support structure; providing at least one photovoltaic module; applying a viscous grounding material at a plurality of predetermined locations along at least one of the support structure and the photovoltaic module; directing the at least one photovoltaic module onto the support structure so as to be in contact with the viscous grounding material; providing at least one attachment member; securing the photovoltaic module to the support structure with at least one attachment member; and fastening the photovoltaic module to the support structure with at least one attachment member, wherein the viscous grounding material penetrates an anodized layer on at least one of the support structure or the photovoltaic module.

Still another aspect of the present disclosure includes a method of grounding at least one photovoltaic module to a support structure, including: applying a viscous grounding material at a plurality of predetermined locations along the support structure; directing the at least one photovoltaic module onto the support structure, wherein the at least one photovoltaic module is in contact with the viscous grounding material; and securing the photovoltaic modules to the support structure, wherein the viscous grounding material penetrates an anodized layer on at least one of the support structure or the photovoltaic module.

One advantage of the present disclosure is that the system for grounding PV modules provides a reliable, weather resistant, and non-corrosive ground connection for metallic parts of the PV system.

Another advantage of the present disclosure is the system is easy to install, which reduces the amount of field labor required to install the PV grounding system.

Yet another advantage of the present disclosure is that the system requires fewer parts than conventional grounding systems and can be used with current grounding systems.

Still another advantage of the present disclosure is that the system reduces the cost of installing a PV grounding system.

Yet another advantage of the present disclosure is when the module frame is in compressed contact with the support structure and grounding composition, no customized ground clips or washers are needed to provide a grounding solution.

Other features and advantages of the present disclosure will be apparent from the following more detailed description of the preferred embodiment, taken in conjunction with the accompanying drawings which illustrate, by way of example, the principles of the disclosure, and in which:
FIG. 1 is a perspective view of a PV grounding system according to an embodiment of the present disclosure.
FIG. 2 is an enlarged side view of the PV grounding system of FIG. 1 of the present disclosure.
FIG. 3 is a side view of mounted PV modules according to an embodiment of the present disclosure.
FIG. 4 is a sectional view of the PV grounding system of FIG. 2 taken in direction 4-4 showing the viscous grounding material according to an embodiment of the present disclosure.
FIG. 5 is sectional view of the PV grounding system of FIG. 2 showing an alternative embodiment for placing the viscous grounding material according to an embodiment of the present disclosure.
FIG. 6 is an exploded perspective view of a PV grounding system according to an embodiment of the present disclosure.
FIG. 7 is a side view of the assembled PV grounding system according to an embodiment of the present disclosure.

Wherever possible, the same reference numbers will be used throughout the drawings to refer to the same or like parts.

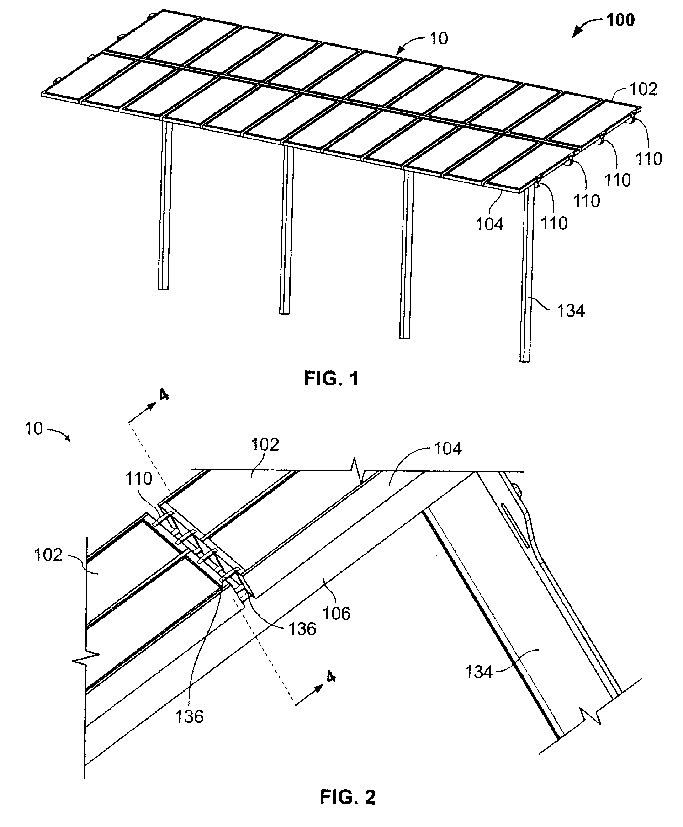

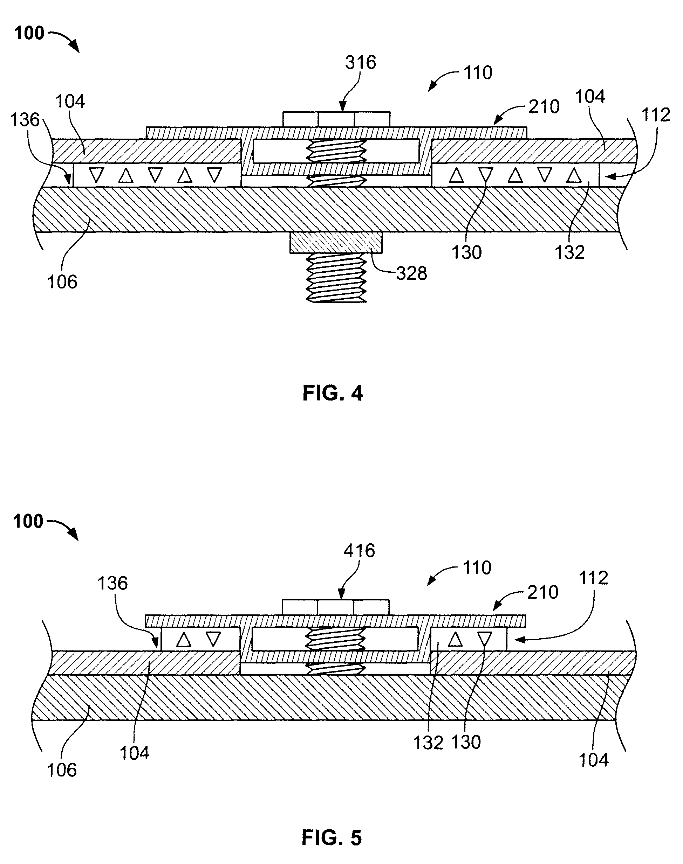

As shown in FIG. 1, a PV array 10 includes a plurality of PV modules 102 in series to generate electricity. PV modules 102 are installed in a variety of areas that have available direct sunlight, such as on the ground away from trees, on residential rooftops, on commercial rooftops, and in other areas. FIG. 4 provides a system 100 for grounding PV modules 102 which includes frame 104 for supporting PV modules 102, a support structure 106, and a viscous grounding material 112 disposed between the frame 104 and support structure 106, wherein the viscous grounding material 112 includes a plurality of metal particles 130 and a vehicle 132 for delivering the plurality of metal particles 130. By "grounding" and its grammatical variations. it is meant that a conducting connection between an electric circuit or equipment and the earth or some other conducting body that is connected to earth is provided. In the present embodiment, PV module 102 includes a plurality of PV cells retained by frame 104 for support. Frame 104 is generally a conductive metal such as, but not limited to, anodized aluminum. Frame 104 is generally placed on, mounted to, or supported by a support structure 106. Support structure 106 includes a rack or rails made from an electrically conductive metal, such as, but not limited to, aluminum, zinc plated steel, stainless steel, painted steel, galvanized steel, or titanium. Support structure 106 can additionally include an anchoring assembly 134, such as a ground mount, pole mount, or tracking assembly, which secures support structure 106 and PV modules 102 to the desired location on the ground, roof, or other location.

FIG. 2 is an enlarged side view of the PV array 10 of FIG. 1 of the present disclosure. PV modules 102 are connected to adjacent PV modules 102 in PV array 10 by attachment members 110. Attachment members 110 also attach the PV module 102 to the support structure 106. Attachment members 110 include, but are not limited to, mounting clip assemblies, mounting screw assemblies, mounting lug assemblies, mounting pin assemblies, and combinations thereof. Attachment members 110 are electrically conductive materials or non-conductive materials, examples of materials for attachment members 100 include, but are not limited to, aluminum and stainless steel.

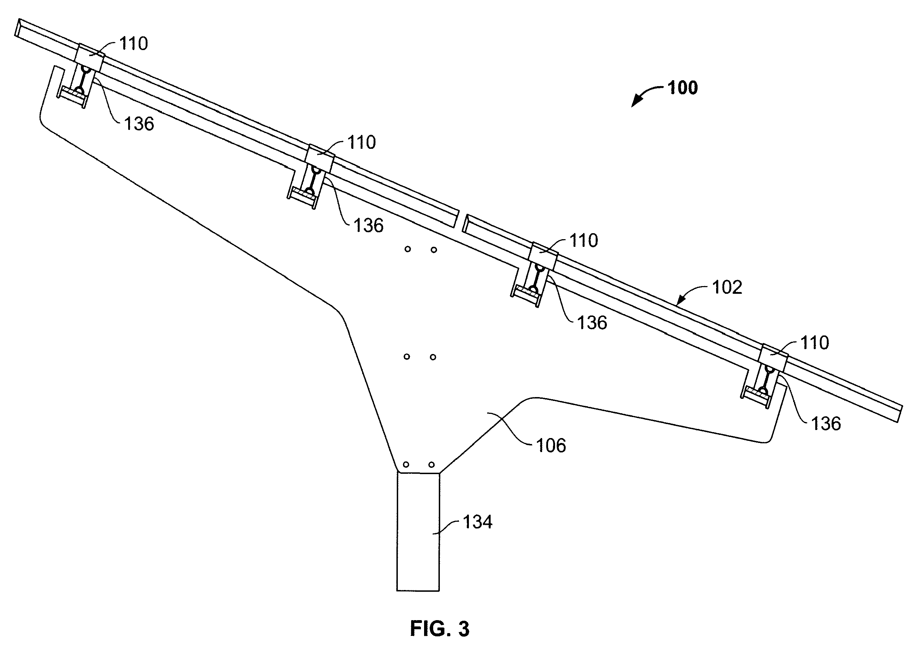

FIG. 3 is a side view of a ground mounted PV module 102 according to an embodiment of the present disclosure. Anchoring assembly 134, shown as a mounting pole, provides support for support structure 106 or rack assembly, and pole 134 also serves as a device to anchor the entire PV array 10 to the ground. Support structure 106 provides a surface for mounting and securing PV modules 102 using attachment members 110.

FIG. 4 is a sectional view of the PV grounding system 100 of FIG. 2 taken in direction 4-4 showing the viscous grounding material 112 according to an embodiment of the present disclosure. Viscous grounding material 112 is disposed between frame 104 and support structure 106. Viscous grounding material 112 includes a plurality of metal particles 130 and a vehicle 132 for delivering the plurality of metal particles 130, as discussed in further detail hereinafter. Attachment member 110, shown as a mounting clip 210, provides adequate force to hold frame 104 together with support structure 106. The attachment member 110 can optionally contain a bolt 316 and nut 328, as shown. In the present embodiment, viscous grounding material 112 is preferably applied a delivery system, such as a caulk-gun, to predetermined locations 136 on the support structure 106. Predetermined locations 136 on support structure 106 are generally located where attachment members 110 secure frame 104 to support structure 106. As shown in the figures, predetermined locations 136 on support structure 106 receive viscous grounding material 112. These predetermined locations 136 on support structure 106 correspond to where attachment members 110 will be placed to connect and secure frame 104 to support structure 106.

The delivery device is used to provide a specified amount of viscous grounding material at each predetermined location 136. For example, in some applications the delivery device is used to deliver approximately 1 square centimeter (0.2 square inch) to approximately 6.5 square centimeters (one square inch) of viscous grounding material 112 to predetermined locations 136 on support structure 106. In the present embodiment, after viscous grounding material 112 is applied, mounting clip 210 is attached to support structure 106 via bolt 316 and nut 328. Bolt 316 and nut 328 in combination with mounting clip 210 provides a force sufficient to cause metal particles 130 suspended in vehicle 132 of viscous grounding material 112 to penetrate or scratch the protective layer of the anodized aluminum of frame 104 or support structure 106. Metal particles 130 of viscous grounding material 112 provide grounding between frame 104 of PV modules 102 and support structure 106.

FIG. 5 is a second embodiment for placing viscous grounding material 112 in PV grounding system 100 according to an embodiment of the present disclosure. In this embodiment, viscous grounding material 112 is disposed on frame 104, between frame 104 and mounting clip 210. Viscous grounding material 112 includes a plurality of metal particles 130 and a vehicle 132 for delivering plurality of metal particles 130. Viscous grounding material 112 is applied using a delivery system, such as a caulk gun or other device, to predetermined locations 136 on attachment member 110. For example, in some applications the delivery device is used to deliver approximately 1 square centimeter (0.2 square inch) to approximately 6.5 square centimeters (one square inch) of viscous grounding material 112 to predetermined locations 136 on support structure 106. Attachment member 110, shown as a mounting clip 210, provides adequate force to hold frame 104 together with support structure 106. The attachment member 110 can optionally contain a mounting screw assembly 416, as shown. Screw or threaded bolt of screw assembly 416 screws into a pre-threaded hole in support structure 106, which secures and connects mounting clip 210 to support structure 106. In this embodiment, attachment member 110 is made from an electrically conductive material. Attachment member 110, here a mounting clip 210 and screw assembly 416, provides a force sufficient to cause metal particles 130 suspended in vehicle 132 of viscous grounding material 112 to break the protective layer of the anodized aluminum in frame 104. Metal particles 130 of viscous grounding material 112 provide a ground between frame 104 of PV modules 102 and mounting clip 210.

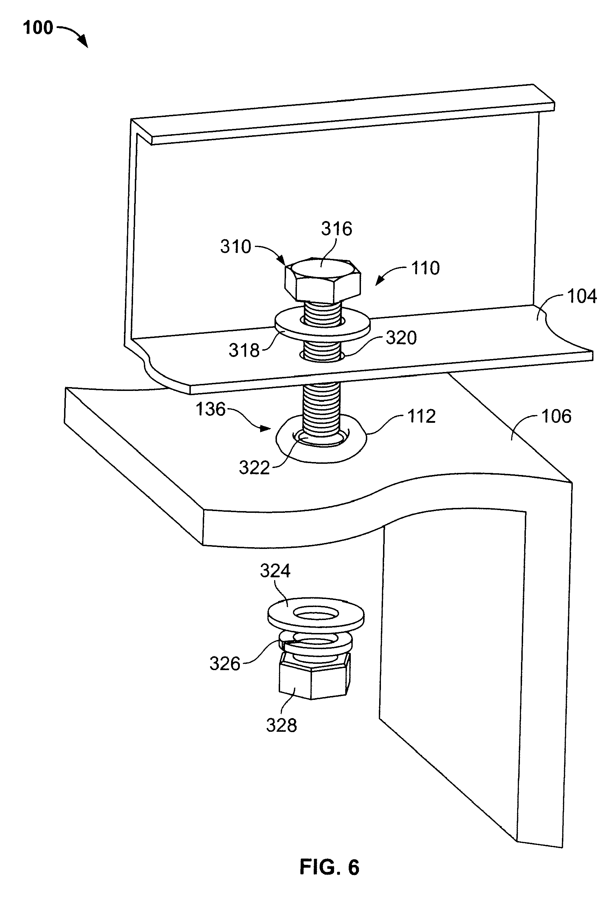

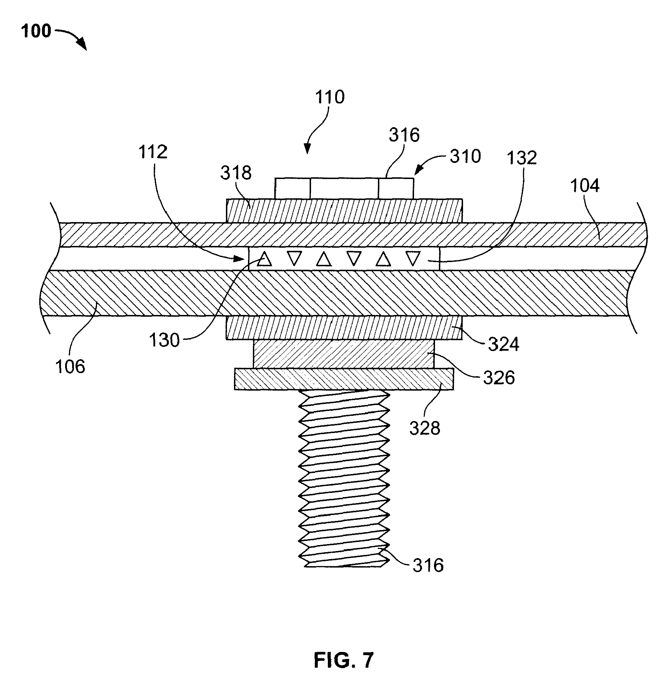

FIG. 6 is an exploded perspective view of a PV grounding system 100 according to an embodiment of the present disclosure. System 100 for grounding PV modules 102 includes frame 104 for supporting PV modules 102, a support structure 106, and a viscous grounding material 112 disposed between the frame 104 and support structure 106. As shown in FIG. 7, viscous grounding material 112 includes a plurality of metal particles 130 and a vehicle 132 for delivering plurality of metal particles 130. Viscous grounding material 112 is disposed between frame 104 and support structure 106 at predetermined locations 136. In this embodiment, viscous grounding material 112 is disposed adjacent a second metal clearance hole 322 on the portion of support structure 106 that receives frame 104. Viscous grounding material 112 may optionally be disposed around the outer surface of first metal clearance hole 320 of frame 104 that comes into contact with support structure 106. Attachment member 110, here a mounting bolt assembly 310, includes bolt 316, first flat washer 318, second flat washer 324, split washer 326, and nut 328. Mounting bolt assembly 310 provides adequate force to secure frame 104 to support structure 106. After viscous grounding material 112 is applied, first flat washer 318 is aligned with first metal clearance hole 320 of frame 104 and placed on frame 104. Bolt 316 is then inserted into first metal clearance hole 320 of frame 104 then inserted into second metal clearance hole 322 of support structure 106. Second flat washer 324 is directed onto bolt 316 adjacent to support structure 106. Split washer 326 is placed on bolt 316 adjacent to second flat washer 324. Nut 328 is placed on bolt 316 adjacent to split washer 326 and tightened to provide adequate force to secure frame 104 to support structure 106. Force from mounting bolt assembly 110 causes metal particles 130 of viscous grounding material 112 to break the protective layer of the anodized aluminum of frame 104 or support structure 106. Metal particles 130 of viscous grounding material 112 provide grounding between frame 104 of PV modules 102 and support structure 106.

The present disclosure provides a method of assembling a photovoltaic array 10. The method includes: providing a support structure 106, providing at least one photovoltaic module 102, applying a viscous grounding material 112 at a plurality of predetermined locations 136 along at least one of the support structure 106 and the photovoltaic module102, directing the at least one photovoltaic module 102 onto the support structure 106 so as to be in contact with the viscous grounding material 112, providing at least one attachment member 110, securing the photovoltaic module 102 to the support structure 106 with at least one attachment member 110 and fastening the photovoltaic module 102 to the support structure 106 with at least one attachment member 110, wherein the viscous grounding material 112 penetrates an anodized layer on at least one of the support structure 106 or the photovoltaic module 102.

The present disclosure also provides a method of grounding at least one photovoltaic module 102 to a support structure 106. The method includes: applying a viscous grounding material 112 at a plurality of predetermined locations 136 along support structure 106, directing the at least one photovoltaic module 102 onto support structure 106, wherein the at least one photovoltaic module 102 is in contact with viscous grounding material 112, and securing photovoltaic modules 102 to support structure 106, wherein viscous grounding material 112 penetrates an anodized layer on at least one of support structure 106 or the photovoltaic module 102. The method further includes: providing a plurality of attachment members 110, applying viscous grounding material 112 to attachment members 110, and fastening the at least photovoltaic module 102 to support structure 106 with the plurality of attachment members 110.

As shown in FIG. 4, viscous grounding material or composition 112 includes a plurality of metal particles 130 and a vehicle 132 for delivering plurality of metal particles 130. Vehicle 132 of grounding composition 112 is made from materials that are non-corrosive to metal and have a viscosity sufficiently high so that it can be applied using a caulk-gun or other delivery system. Vehicle 132 of viscous grounding material 112 can include any material that has a "thick" or higher viscosity than water and is non-corrosive to metal. Additionally, vehicle 132 should be resistant to water, be able to withstand temperatures of up to 60°C (140 °F), and protect the metal of PV modules 102 and support structures 106 from corrosion resulting from the environmental conditions that PV arrays 10 are exposed to over its service-life. Examples of viscous grounding materials 112 include, but are not limited to, silicon, petroleum jelly, pastes, sealants, anti-oxidation compounds, and combinations thereof. In the present embodiment, vehicle 132 is an anti-oxidation compound, such as for example, but not limited to, an aluminum anti-oxidation compound. Viscous grounding composition 112 can be applied using a delivery system to apply approximately 1 square centimeter (0.2 square inch) to approximately 6.5 square centimeters (one square inch) to predetermined locations 136 on support structure 106. The plurality of metal particles 130 are preferably angular in geometry to penetrate the protective layer of the anodized aluminum of frame 104 or support structure 106. Particle size of the plurality of metal particles 130 is approximately 50 microns to approximately 500 microns. The plurality of metal particles 130 preferably have a hardness that is greater than that of aluminum or a Mohs hardness of approximately 4 or greater. The plurality of metal particles 130 additionally preferably have an electrical resistivity of less than 1 x 10⁻⁴ Ohm-cm. Examples of suitable metal particles 130 include, but are not limited to, stainless steel, titanium, tungsten, nickel, and combinations thereof.

Based on an interpretation of safety standards, such as International Electrotechnical Commission (IEC) 61730-1-2 (1^{st} Edition, 2004) and UL 1703 (3^{rd} Edition, 2002), resistivity between frame 104 and PV module 102 shall not exceed 0.1 ohms (100 milli-ohms). In the present embodiment, viscous grounding material 112 is disposed between support structure 106 and frame 104 of PV modules 102 at predetermined locations 136 and is secured using attachment members 110. By utilizing the grounding system 100 at predetermined location 136, the resistivity of the grounding system 100 is measured in a range of approximately 0.03 ohms (30 milli-ohms) or less. By utilizing the grounding system 100 in the present embodiment, viscous grounding material 112 is applied between support structure 106 and frame 104 of PV modules 102 at four predetermined locations 136, where attachment members 110 provide adequate force to penetrate anodized layer on either PV modules or support structure 106 and attachment members secure PV modules 102 to support structure 106. In this embodiment, the resistivity of PV grounding system 100 is less than approximately 0.01 ohms (10 milli-ohms).

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present inventions are defined by the following numbered clauses:
1. A system for grounding photovoltaic modules, comprising:
   (a) a frame for supporting photovoltaic modules;
   (b) a support structure; and,
   (c) a viscous grounding material disposed between the frame and support structure.
2. The system of clause 1, wherein the viscous grounding material comprises a plurality of metal particles and a vehicle for delivering the plurality of metal particles.
3. The system of any preceding clause, further comprising at least one attachment member disposed to secure one or more photovoltaic modules to the support structure, wherein the viscous grounding material is applied to said at least one attachment member.
4. The system of any preceding clause, wherein the frame comprises an electrically conductive metal.
5. The system of any preceding clause, wherein the support structure comprises an electrically conductive metal.
6. The system of any preceding clause, wherein the support structure comprises aluminum, zinc plated steel, stainless steel, painted steel, galvanized steel, or titanium.
7. The system of any preceding clause, wherein the at least one attachment member is selected from the group consisting of: a mounting clip, a mounting screw assembly, a mounting bolt assembly, and combinations thereof.
8. The system of any preceding clause, wherein the vehicle for delivering the plurality of metal particles is non-corrosive to metal and a material selected from the group consisting of: silicone, petroleum jelly, an anti-oxidation compound, and combinations thereof.
9. The system of any preceding clause, wherein the plurality of metal particles are angular in geometry and have a particle size of approximately 50 microns to approximately 500 microns.
10. The system of any preceding clause, wherein the plurality of metal particles have a Mohs hardness of approximately 4 or greater.
11. The system of any preceding clause, wherein the plurality of metal particles have an electrical resistivity of less than approximately 1 x 10⁻⁴ Ohm-cm.
12. A method of assembling a photovoltaic array, comprising:
   (a) providing a support structure;
   (b) providing at least one photovoltaic module;
   (c) applying a viscous grounding material at a plurality of predetermined locations along at least one of the support structure and the photovoltaic module;
   (d) directing the at least one photovoltaic module onto the support structure so as to be in contact with the viscous grounding material;
   (e) providing at least one attachment member;
   (f) securing the photovoltaic module to the support structure with at least one attachment member; and,
   (g) fastening the photovoltaic module to the support structure with at least one attachment member, wherein the viscous grounding material penetrates an anodized layer on at least one of the support structure or the photovoltaic module.
13. The method of any preceding clause, wherein the viscous grounding material comprises a plurality of metal particles and a vehicle for delivering the plurality of metal particles.
14. The method of any preceding clause, wherein the grounding material is additionally applied to the plurality of attachment members.
15. The method of any preceding clause, wherein the vehicle for delivering the plurality of metal particles is non-corrosive to metal, resistant to water, and can withstand temperatures up to approximately 60°C, and wherein the vehicle comprises a material selected from the group consisting of: silicone, petroleum jelly, an anti-oxidation compound, and combinations thereof.
16. The method of any preceding clause, wherein the metal particles are angular in geometry and have a particle size of approximately 50 microns to approximately 500 microns.
17. A method of grounding at least one photovoltaic module to a support structure, comprising:
   (a) applying a viscous grounding material at a plurality of predetermined locations along the support structure;
   (b) directing the at least one photovoltaic module onto the support structure, wherein the at least one photovoltaic module is in contact with the viscous grounding material; and,
   (c) securing the photovoltaic modules to the support structure, wherein the viscous grounding material penetrates an anodized layer on at least one of the support structure or the photovoltaic module.
18. The method of any preceding clause, further comprising:
   (a) providing a plurality of attachment members;
   (b) applying the viscous grounding material to the attachment members; and,
   (c) fastening the photovoltaic module to the support structure with the plurality of attachment members.
19. The method of any preceding clause, wherein the viscous grounding material comprises a plurality of metal particles and a vehicle for delivering the plurality of metal particles.
20. The method of any preceding clause, wherein the vehicle for delivering the plurality of metal particles is non-corrosive to metal, resistant to water, and can withstand temperatures up to approximately 60°C, and wherein the vehicle comprises a material selected from the group consisting of: silicone, petroleum jelly, an anti-oxidation compound, and combinations thereof.

## Claims

1. A system (100) for grounding photovoltaic modules (102), comprising:
(a) a frame (104) for supporting photovoltaic modules (102);
(b) a support structure (106); and,
(c) a grounding material (112) disposed between the frame (104) and support structure (106), wherein the grounding material (112) comprises a plurality of metal particles (130) and a vehicle (132) for delivering the plurality of metal particles (130).

2. The system (100) of claim 1 further including at least one attachment member (110), wherein the at least one attachment member (110) is disposed to secure one or more photovoltaic modules (104) to the support structure (106).

3. The system (100) of claim 2, wherein the grounding material (112) is additionally applied to the at least one attachment member (110).

4. The system (100) of any preceding claim, wherein the frame (104) comprises an electrically conductive metal.

5. The system (100) of any preceding claim, wherein the support structure (106) comprises an electrically conductive metal.

6. The system (100) of any preceding claim, wherein the support structure (106) comprises aluminum, zinc plated steel, stainless steel, painted steel, galvanized steel, or titanium.

7. The system (100) of claim 2 or any claim dependent thereon, wherein the at least one attachment member (110) is selected from the group consisting of: a mounting clip (210), a mounting screw assembly (416), a mounting bolt assembly (310), and combinations thereof.

8. The system (100) of any preceding claim, wherein the vehicle (132) for delivering the plurality of metal particles (130) is non-corrosive to metal and a material selected from the group consisting of: silicone, petroleum jelly, an anti-oxidation compound, and combinations thereof.

9. The system (100) of any preceding claim, wherein the plurality of metal particles (130) are angular in geometry, have a particle size of approximately 50 microns to approximately 500 microns, and have a Mohs hardness approximately of greater than 4.

10. The system (100) of any preceding claim, wherein the plurality of metal particles (130) have an electrical resistivity of less than 1 x 10⁻⁴ Ohm-cm.
